# EUROPEAN PATENT SPECIFICATION

(11) **EP 1 543 199 B1**
(45) Date of publication and mention of the grant of the patent: **19.11.2008**
(21) Application number: 03750975.9
(22) Date of filing: 19.09.2003
(51) Int. Cl.: E01H 11/00, A01M 21/02

(54) **IMPLEMENT FOR REMOVING WEEDS FROM PAVIOURS JOINTS**
GERÄT ZUR UNKRAUTENTFERNUNG VON PFLASTERFUGEN
OUTIL PERMETTANT DE RETIRER DES MAUVAISES HERBES SITUEES DANS DES JOINTS DE PAVES

(30) Priority: 24.09.2002 GB 0222235
(43) Date of publication of application: 22.06.2005
(73) Proprietor: Howells, Donald Glanmor, Northamptonshire NN10 9EX (GB)
(72) Inventor: Howells, Donald Glanmor, Northamptonshire NN10 9EX (GB)
(74) Representative: Evans, Huw David Duncan
(86) International application number: PCT/GB2003/004177
(87) International publication number: WO 2004/029366

(56) References cited:
- DE-U- 20 115 300
- DE-U- 29 623 797
- US-A- 465 448
- US-A- 884 416
- US-A- 4 546 831

## Description

The present invention relates to an implement for use in removing weeds, moss or other matter from the joints between paviours.

Paviours have become popular for driveways, pathways etc. but are prone to the growth of weeds and moss and the accumulation of other matter in the joints between them.

US-A-884416 discloses an implement for cutting sods of grass away from the edges of paths, the implement comprising an elongate handle carrying a blade at one end thereof, the blade extending along an axis at an angle of 25 to 65° to the axis of the handle and being formed with an apex at its forward end, said blade being bent or folded along its longitudinal axis so that it is V-shaped or dished in cross-section. The implement is positioned such that the blade extends forwardly along the surface of the ground, the implement then being pushed forwardly to cut away the sods.

I have now devised a method of removing weeds, mess or other matter from the joints between paviours using implement which is effective in removing weeds or moss from the joints between paviours.

In accordance with this invention, there is provided a method of removing weeds, moss or other matter from the joints between paviours, the method comprising:
providing an implement comprising an elongate handle carrying a blade at one end thereof, the blade extending along an axis at an angle of 30° to 55° to the axis of the handle and being formed with an apex at its forward end, said blade being bent or folded along its longitudinal axis so that it is V-shaped or dished in cross-section;
holding the implement by said handle, with said handle inclined downwardly away from the user and said blade extending forwardly at a steeper angle, with its concave side facing toward the user;
engaging said apex of said blade in a joint between paviours; and
drawing the implement towards the user, drawing the blade along the joint to clear out the weeds, moss or other matter from the joint.

The implement is arranged for its handle to be held by a user when standing, the handle extending forwardly and downwardly from the user with the apex of the blade engaged in a joint between paviours, directed at a steeper angle than the handle, but still slightly forwardly or vertically. The user then draws the implement towards him, drawing the blade along the joint to clear out the weeds, moss or other matter from the joint.

Preferably the blade is formed with a generally rounded apex, to complement the shape of the groove formed at ground level between two paviours, this groove resulting from the chamfered top edges of the paviours.

An embodiment of the present invention will now be described by way of example only and with reference to the accompanying drawings, in which:
FIGURE 1 is a side view of an implement in accordance with the present invention, in use clearing out the weeds from the joints between paviours;
FIGURE 2 is a view of a typical area of pathway or driveway made up of paviours;
FIGURE 3 is an enlarged view of the head of the implement, shown in the process of clearing out moss from the joint between two paviours;
FIGURE 4 is a front view of the head of the implement; and
FIGURE 5 is a side view of the head of the implement.

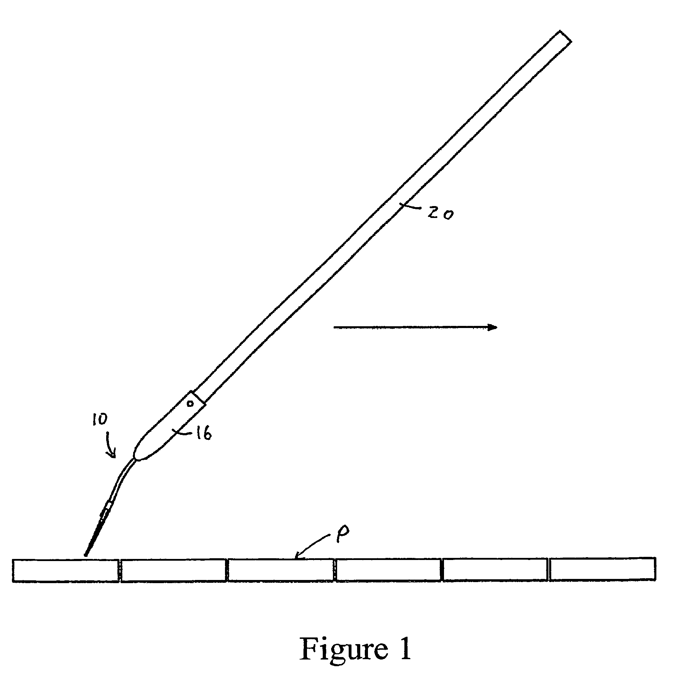

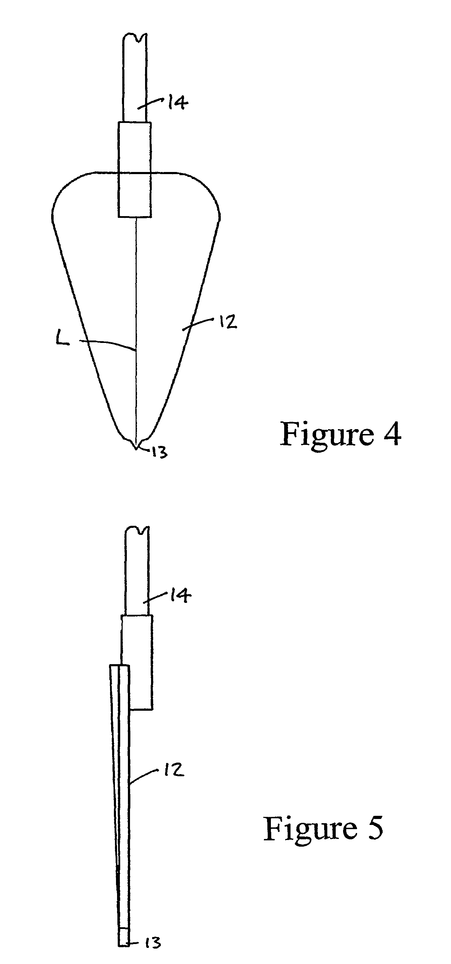

Referring to Figure 1 of the drawings, there is shown a long-handled implement for clearing weeds, moss or other matter from the joints between paviours, the implement comprising a metal head 10 fitted to one end of a straight, elongate handle 20. As shown in Figures 4 and 5, the head 10 of the implement comprises a generally triangular-shaped blade 12 extending from one end of a stem 14, the other end of the stem 14 being provided with a socket 16 (Figure 1) into which the end of the elongate handle 20 is fitted.

The stem 14 of the implement is curved or bent so that the blade 12 is directed at an acute angle to the axis of the handle 20: this angle is in the range of 25 to 65°, preferably in the range 30 to 55° and most preferably in the range 35 to 45°.

The blade 12 of the implement is generally rounded at its apex, but this rounded apex is provided with a triangular-shaped point 13. The blade 12 is also folded along a centre line L through its apex, so as to be slightly V-shaped in cross-section.

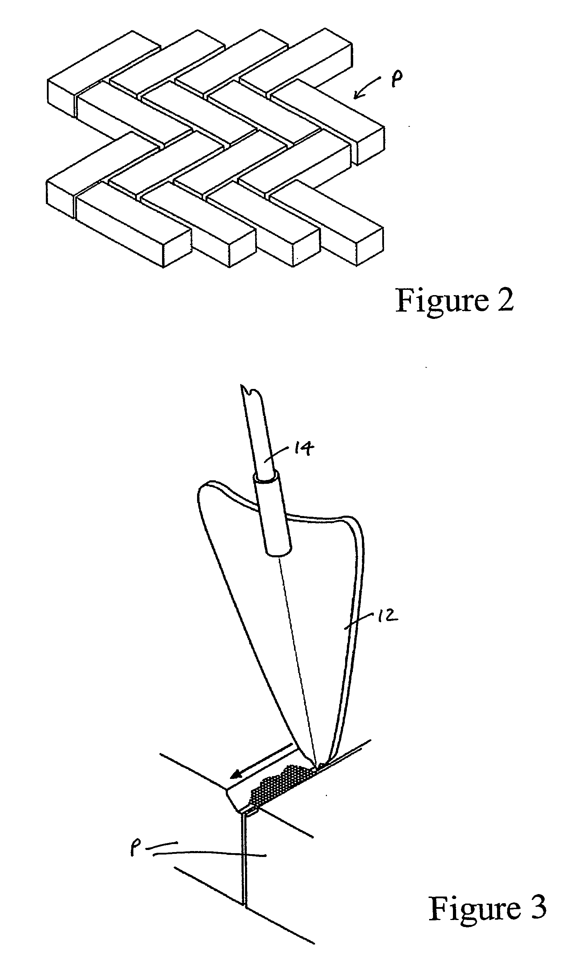

In clearing out weed, moss or other matter from the joints between paviours, shown at P in Figures 1 and 2, the user, in standing position, holds the implement by its handle 20, with the handle inclined downwardly as shown in Figure 1 and the apex of the blade 12 of the implement engaged in a joint between the paviours. The handle 20 thus extends forwardly and downwardly from the user at a comfortable angle, typically in the range of 35 to 55° to the horizontal, with the blade 12 of the implement extending forwardly but at a steeper angle, or vertically: in use, preferably the blade lies at an angle of 0 to 10° to the vertical. The user then draws the implement towards him, as indicated by the arrow in Figure 1, pulling the apex of the blade 12 along the joint, as shown in Figure 3: no other part of the implement is in contact with the paviours.

The rounded apex of the blade 12 matches the groove formed between two adjacent paviours, owing to their chamfered top edges. Moreover, the pointed tip 13 of the blade engages into the top of the small gap between the two adjoining sides of the two paviours. As a result, the blade 12 serves in an effective manner to clear out weeds, moss or other matter from the joints between the paviours.

Also, because of the angle which the blade 12 makes with the surface of the pathway or driveway, the blade rides easily over joints running transversely to the joint along which the implement is drawn.

## Claims

1. A method of removing weeds, moss or other matter from the joints between paviours, the method comprising:
providing an implement comprising an elongate handle (20) carrying a blade (10) at one end thereof, the blade (10) extending along an axis at an angle of 30 to 55° to the axis of the handle (20) and being formed with an apex at its forward end, said blade (10) being bent or folded along its longitudinal axis so that it is V-shaped or dished in cross-section;
holding the implement by said handle (20), with said handle (20) inclined downwardly away from the user and said blade (10) extending forwardly at a steeper angle, with its concave side facing toward the user;
engaging said apex of said blade (10) in a joint between paviours; and
drawing the implement towards the user, drawing the blade (10) along the joint to clear out the weeds, moss or other matter from the joint.

2. A method as claimed in claim 1, **characterised in that** said implement providing step comprises providing an implement having a generally rounded apex.

3. A method as claimed in claim 2, **characterised in that** said implement providing step comprises providing an implement in which said angle of the blade (10) axis relative to the axis of said handle (20) is in the range 35° to 45°.

## Patentansprüche

1. Verfahren zur Entfernung von Unkraut, Moos oder anderen Materialien aus den Verbindungsstellen bzw. Fugen zwischen Platten bzw. Pflaster, wobei das Verfahren umfasst:
Bereitstellen eines Hilfsmittels, das einen länglichen Griff (20) aufweist, der eine Klinge (10) an einem Ende hiervon trägt, wobei die Klinge (10) sich entlang einer Achse mit einem Winkel von 30 bis 55° zur Achse des Griffs (20) erstreckt, und mit einer Spitze an ihrem vorderen Ende gebildet ist, wobei die Klinge (10) entlang ihrer longitudinalen Achse gebogen oder gefaltet ist, so dass sie V-förmig oder im Querschnitt gewölbt vorliegt;
Halten des Hilfsmittels an dem Griff (20), wobei der Griff (20) abwärts vom Verwender weg geneigt ist und die Klinge (10) sich in einem steileren Winkel nach Vorne erstreckt, wobei die konkave Seite nach oben zum Verwender zeigt;
in Eingriff bringen der Spitze der Klinge (10) in eine Fuge zwischen Platten bzw. Pflastern; und
Ziehen des Hilfsmittels in Richtung des Verwenders, Ziehen der Klinge (10) entlang der Fuge, um Unkraut, Moos und andere Materialien aus der Fuge zu entfernen.

2. Verfahren nach Anspruch 1, **dadurch gekennzeichnet, dass** der Schritt der Bereitstellung des Hilfsmittels die Bereitstellung eines Hilfsmittels mit einer allgemein runden Spitze umfasst.

3. Verfahren nach Anspruch 2, **dadurch gekennzeichnet, dass** der Schritt der Bereitstellung des Hilfsmittels die Bereitstellung eines Hilfsmittels umfasst, bei dem der Winkel der Achse der Klinge (10) relativ zur Achse des Griffs (20) im Bereich von 35° bis 45° liegt.

## Revendications

1. Procédé pour enlever des mauvaises herbes, de la mousse et d'autres matières des joints entre pavés, le procédé comprenant les étapes consistant à :
fournir un outil comprenant un manche (20) allongé portant une lame (10) à une extrémité de celui-ci, la lame (10) s'étendant le long d'un axe selon un angle de 30 à 55° par rapport à l'axe du manche (20) et comportant une pointe à son extrémité avant, ladite lame (10) étant courbée ou pliée le long de son axe longitudinal de sorte qu'elle ait en coupe une forme en V ou une forme incurvée ;
tenir l'outil par ledit manche (20), le manche (20) étant incliné vers le bas à l'opposé de l'utilisateur et ladite lame (10) s'étendant vers l'avant selon un angle plus incliné, avec son côté concave orienté vers l'utilisateur ;
engager ladite pointe de ladite lame (10) dans un joint entre des pavés ; et
tirer l'outil vers l'utilisateur, en tirant la lame (10) le long du joint pour enlever les mauvaises herbes, la mousse ou d'autres matières du joint.

2. Procédé selon la revendication 1, **caractérisé en ce que** ladite étape de fourniture d'un outil comprend la fourniture d'un outil ayant une pointe généralement arrondie.

3. Procédé selon la revendication 2, **caractérisé en ce que** ladite étape de fourniture d'un outil comprend la fourniture d'un outil dans lequel ledit angle de l'axe de la lame (10) par rapport à l'axe dudit manche (20) est dans la plage de 35° à 45°.
